# EUROPEAN PATENT APPLICATION

(11) **EP 4 752 795 A1**
(43) Date of publication of application: **03.06.2026**
(21) Application number: 25187425.1
(22) Date of filing: 04.07.2025
(51) Int. Cl.: G06Q 10/04, G06Q 10/047, G06Q 10/0631, G06Q 10/08, G06Q 50/40

(54) **METHOD AND SYSTEM FOR OPTIMIZING VEHICLE ALLOCATION IN A TRANSPORTATION SYSTEM**

(30) Priority: 28.11.2024 IN 202441093174
(71) Applicant: Hitachi, Ltd., Tokyo 100-8280 (JP)
(72) Inventor: SHARMA, Ankit, 560055 Bangalore (IN); VELLANDURAI, Akhash, 560055 Bangalore (IN); SAMON, Thiruvengadam, 560055 Bangalore (IN); KUMAR, Vinoth, 560055 Bangalore (IN); BANERJEE, Kingshuk, 560055 Bangalore (IN)
(74) Representative: Manitz Finsterwald Patent- und Rechtsanwaltspartnerschaft mbB

(57) **Abstract**

Embodiments of the present disclosure relate to a method and system for optimizing vehicle allocation in a transportation system. The method comprises receiving sensor values from a first set of vehicles of a plurality of vehicles. The method also comprises applying, using an AI model, an imputation technique on the sensor values to estimate missing sensor values corresponding to the second set of vehicles, and to generate a complete set of sensor values for the plurality of vehicles. Further, the method comprises determining an optimized vehicle plan for one or more routes of the transportation system based on the complete set of sensor values. The optimized vehicle plan comprises tripwise plan of vehicles with sensors and sensor-less vehicles for each route. Lastly, the method comprises allocating the plurality of vehicles to the one or more route at least based on the optimized vehicle plan.

## Description

### FIELD OF TECHNOLOGY

The present disclosure generally relates to the field of transportation system. More particularly, the present disclosure relates to method and system for optimizing vehicle allocation in a transportation system.

### BACKGROUND

Various solutions have been developed to address the problem of missing sensor data and improve the imputation process. These solutions focus on using existing data to fill in gaps left by missing sensor readings. One common approach involves using complex imputation algorithms that apply machine learning techniques, deep learning models, or statistical methods to estimate the missing data points.

US11775873B2 describes splitting the dataset into training and testing sets, interpolating initial values, and then refining those estimates using a trained model. While these algorithms can produce reasonable imputation results, they are often computationally intensive and may not perform well when missing data follows arbitrary or highly dynamic patterns.

Another technique used in prior arts is the imputation of missing data by referencing similar datasets. US11113337B2 describes relying on external data that exhibits similar features or patterns to the dataset being imputed. By comparing the current incomplete dataset with historical or geographically similar data, missing values can be filled using corresponding values from external datasets. However, this approach is not always reliable, particularly in cases where the missing data does not follow predictable or consistent patterns.

US 9443194 describes a method involving nearest neighbour imputation, which estimates missing data by comparing it to other data samples (i.e., the nearest neighbour). While nearest neighbour techniques can be useful in some applications, they fall short in dynamic environments where the missing data patterns are inconsistent or highly variable, such as in the case of passenger demand or fleet occupancy in transportation systems. Interpolation-based methods also struggle when missing data does not align with readily available patterns, making them less effective in real-world scenarios.

Presently, transportation industry is increasingly adopting digital solutions to enhance operational efficiency. Technologies such as demand estimation, timetable optimization, and real-time fleet management have become integral to improving services in sectors like public transportation and logistics. However, these solutions require accurate data from vehicle fleets, typically gathered through sensors installed on vehicles. The challenge lies in the significant cost associated with deploying a large number of sensors, especially given the high investment needed for hardware and infrastructure.

As a result, the industry has explored various approaches to sensor data collection, including algorithms for demand estimation, passenger occupancy tracking, and fleet optimization. One of the primary issues in these systems is the presence of missing or incomplete sensor data, caused by sensor-less vehicles. Incomplete datasets often hinder the efficiency of digital transport solutions, leading to inaccurate predictions and suboptimal performance. As a result, imputation techniques have been developed to estimate or replace missing values in sensor data. While these techniques show promise in addressing missing data, they face limitations in dynamic, real-world environments where predicted data lack accuracy.

While the existing prior arts have made substantial progress in addressing missing data through imputation, most solutions fail to address the underlying problem of sensor data procurement. The focus has largely been on improving the imputation process itself, but there has been little emphasis on optimizing the quality of data collected in the first place. Further, in the context of data imputation, one common challenge is ensuring sufficient accuracy in the imputed data. While sensor procurement and the reliance on sensors can be factors in this process, the primary issue lies in the optimal allocation of non-sensor vehicles. Improper allocation of these vehicles can lead to inaccurate or incomplete data, undermining the effectiveness of the imputation process. Therefore, a key concern is how to best allocate available vehicles to maximize data accuracy and ensure the reliability of imputed values.

Moreover, prior solutions typically rely on static sensor allocation models, which do not adapt to real-time changes in data patterns. In dynamic environments, such as transportation systems, external conditions like traffic, time of day, and passenger behaviour have a significant impact on demand and occupancy levels. Static allocation strategies, which are commonly used in applications like road condition monitoring, cannot capture the dynamic nature of data in transportation systems. Consequently, these methods are often inefficient, leading to either redundant sensor deployment or gaps in coverage.

Additionally, while many imputation algorithms can achieve acceptable accuracy, they may not perform well when the missing data follows unpredictable or non-periodic patterns. In such cases, the effectiveness of interpolation-based methods or nearest neighbour techniques is limited. More complex algorithms, such as ensemble methods, can improve imputation accuracy but at the cost of increased computational complexity, which may be impractical for real-time applications in large-scale fleets or sensor networks.

In view of the foregoing discussion, there exists a need in the art for a method and system that addresses these limitations by optimizing the procurement of sensor data through dynamic allocation of sensor resources.

The information disclosed in this background of the disclosure section is only for enhancement of understanding of the general background of the disclosure and may not be taken as an acknowledgement or any form of suggestion that this information forms the prior art already known to a person skilled in the art.

### SUMMARY

The foregoing summary is illustrative only and is not intended to be in any way limiting. In addition to the illustrative aspects, embodiments, and features described above, further aspects, embodiments, and features will become apparent by reference to the drawings and the following detailed description.

In an embodiment, method for optimizing vehicle allocation in a transportation system is disclosed. The method comprises receiving sensor values from a first set of vehicles of a plurality of vehicles. The first set of vehicles comprises vehicles with sensors, and the plurality of vehicles comprises a second set of vehicles including sensor-less vehicles. The method also comprises applying, using an AI model, an imputation technique on the sensor values to estimate missing sensor values corresponding to the second set of vehicles, and to generate a complete set of sensor values for the plurality of vehicles. Further, the method comprises determining an optimized vehicle plan for one or more routes of the transportation system based on the complete set of sensor values. The optimized vehicle plan comprises trip-wise plan of vehicles with sensors and sensor-less vehicles for each route. Lastly, the method comprises allocating the plurality of vehicles to the one or more route at least based on the optimized vehicle plan.

In an embodiment, a system for optimizing vehicle allocation in a transportation system is disclosed. The system comprises a memory and at least one processor. The at least one processor is configured to receive sensor values from a first set of vehicles of a plurality of vehicles, wherein the first set of vehicles comprises vehicles with sensors. The first set of vehicles comprises vehicles with sensors, and the plurality of vehicles comprises a second set of vehicles including sensor-less vehicles. Further, the at least one processor is configured to apply, using an AI model, an imputation technique on the sensor values to estimate missing sensor values corresponding to the second set of vehicles, and to generate a complete set of sensor values for the plurality of vehicles. The at least one processor is also configured to determine an optimized vehicle plan for each route of the transportation system based on the complete set of sensor values. The optimized vehicle plan comprises trip-wise plan of vehicles with sensors and sensor-less vehicles for each route. Lastly, the at least one processor is configured to allocate the plurality of vehicles to each route at least based on the optimized vehicle plan.

### BRIEF DESCRIPTION OF THE DRAWINGS

The accompanying drawings, which are incorporated in and constitute a part of this disclosure, illustrate exemplary embodiments and, together with the description, serve to explain the disclosed principles. The same numbers are used throughout the figures to reference like features and components. Some embodiments of at least one of device and methods in accordance with embodiments of the present subject matter are now described, by way of example only, and with reference to the accompanying figures, in which:
**FIG. 1** illustrates an environment for optimizing vehicle allocation in a transportation system, in accordance with some embodiments of the present disclosure;
**FIG. 2** illustrates route data sets comparison, in accordance with an embodiment of the present disclosure;
**FIG. 3** illustrates a block diagram for determining missing sensor values using data imputation technique, in accordance with an embodiment of the present disclosure;
**FIG. 4A** illustrates a flow diagram for optimizing vehicle allocation in a transportation system, in accordance with an embodiment of the present disclosure;
**FIG. 4B** illustrates a data flow block diagram for optimizing vehicle allocation in a transportation system, in accordance with an embodiment of the present disclosure;
**FIG. 5A-5C** illustrate exemplary optimized vehicle plan generation, in accordance with some embodiments of the present disclosure;
**FIG. 6** illustrates a block diagram of a system for optimizing vehicle allocation in a transportation system, in accordance with an embodiment of the present disclosure; and
**FIG. 7** illustrates a flowchart for a method for optimizing vehicle allocation in a transportation system, in accordance with an embodiment of the present disclosure.

It may be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration". Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It can be understood, however, that it is not intended to limit the disclosure to the particular forms disclosed, but on the contrary, the disclosure is to cover a plurality of modifications, equivalents, and alternative falling within the spirit and the scope of the disclosure.

The terms "comprises", "comprising", or any other variations thereof, are intended to cover a non-exclusive inclusion, such that a setup, device, or method that comprises a list of components or steps does not include only those components or steps but may include other components or steps not expressly listed or inherent to such setup or device or method. In other words, one or more elements in a device or system or apparatus proceeded by "comprises... a" does not, without more constraints, preclude the existence of other elements or additional elements in the device or system or apparatus.

In the following detailed description of the embodiments of the disclosure, reference is made to the accompanying drawings that form a part thereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

The terminology "Artificial intelligence (AI) model" and "neural network" are interchangeably used throughout the specification. The AI module may be a combination of hardware module and software module. The hardware module may comprise necessary circuitry to perform the functionality discussed in the embodiments below.Embodiments of the present disclosure relate to a method and system for optimizing vehicle allocation in a transportation system. According to an embodiment of the present disclosure, the method and system focuses on enhancing the quality of the data used for imputation by intelligently managing sensor placement and data collection. This dynamic allocation approach aims to improve the accuracy of imputed data, thereby lowering the costs associated with data collection and sensor deployment. Further, by dynamically adjusting sensor resources in response to real-time conditions, such as changes in passenger behaviour, traffic, and time of day, the method and system enables more efficient and targeted data collection.

Further, the method and system of the present disclosure also reduce the computational complexity of imputation algorithms, as the number of sensors and data points to be processed is minimized. As a result, the methodology is more cost-effective and scalable, making it suitable for large-scale transportation networks where real-time data accuracy is critical for optimizing operations. Therefore, the method and system of the present disclosure introduces a more efficient and intelligent methodology for sensor data procurement in digital transportation solutions. By combining dynamic sensor allocation with advanced imputation techniques, higher-quality data collection is ensured. This leads to improved imputation accuracy, reduced operational costs, and enhanced scalability of demand-based transport solutions.

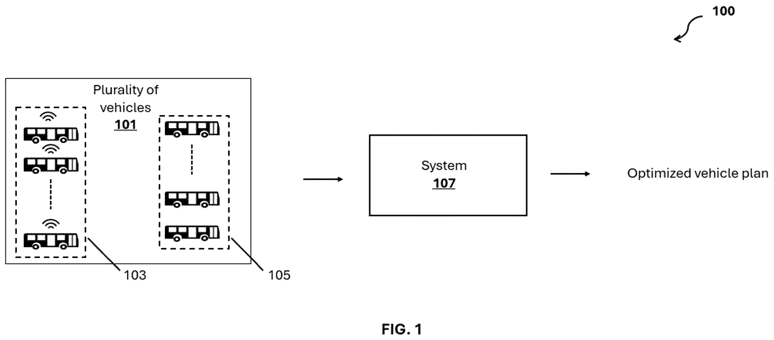

FIG. 1 illustrates an environment 100 for optimizing vehicle allocation in a transportation system, in accordance with some embodiments of the present disclosure.

The environment 100 depicts a plurality of vehicles 101 and a system 107. Further, the plurality of vehicles 101 comprises a first set of vehicles 103, and a second set of vehicles 105. The first set of vehicles 103 comprises vehicles with sensors and the second set of vehicles 105 comprises sensor-less vehicles.

The sensors from the first set of vehicles 103 may be configured to monitor and collect sensor values corresponding to the location, vehicle speed, traffic conditions, passenger occupancy tracking, and other environmental factors. The types of sensors is not limited to the above parameters and any other parameter associated with the transportation system that can be measured by the sensors is well within the scope of the present disclosure.

The system 107 may be configured to receive the sensor values from the first set of vehicles 103 of the plurality of vehicles 101 and estimate missing sensor values corresponding to the second set of vehicles 105. Based on the estimated missing sensor values, the system 107 may be configured to generate a complete set of sensor values for the plurality of vehicles 101. The estimation of missing sensor values is discussed in further detail in the embodiments below.

Further, the system 107 may also be configured to determine an optimized vehicle plan for one or more routes of the transportation system. The optimized vehicle plan may comprise trip-wise plan of vehicles with sensors and sensor-less vehicles for the one or more routes. The determination of the optimized vehicle plan is discussed in further detail in the embodiments below. Moreover, the system 107 may also be configured to allocate the plurality of vehicles to one or more routes based on the optimized vehicle plan. The allocation of the plurality of vehicles to the one or more routes is also discussed in further detail in the embodiments below.

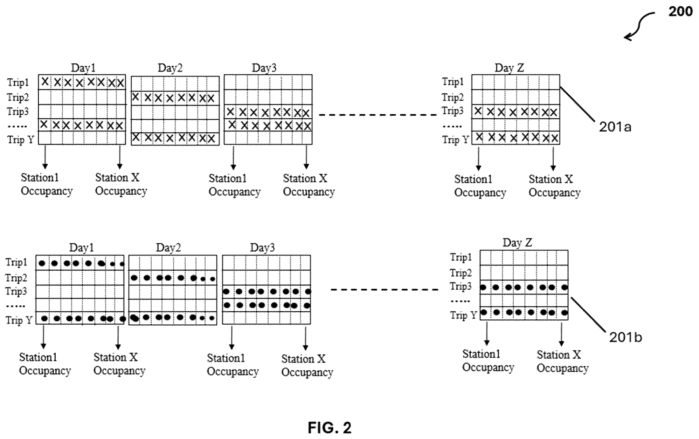

FIG. 2 illustrates route data sets comparison, in accordance with an embodiment of the present disclosure.

A route data set 201a illustrates the set of day-wise sensor values of a plurality of vehicles for a particular route in a transportation system. The route data set 201a may comprise trip-wise dataset. The vertical line of cells in 201a and 201b represents the sensor values of a vehicle for a particular trip whereas the horizontal line of cells represents the sensor values of the vehicle at a particular location. The plurality of vehicles comprises a first set of vehicles and a second set of vehicles. The first set of vehicles comprises vehicles with sensors and the second set of vehicles comprises sensor-less vehicles. In an example, sensor values from the first set of vehicles may be recorded. The sensors of the first set of vehicles may be configured to monitor and collect sensor values corresponding to the location, vehicle speed, traffic conditions, passenger occupancy tracking and other environmental factors. The sensor values may be recorded for each trip 1, trip 2.... to trip Y.

In an embodiment, vehicles with sensors are operated in one or more trips of a route and sensor-less vehicles are operated in remaining trips of route. The route data set 201a may comprise sensor values corresponding to the vehicles with sensors. Since the second set of vehicles comprises sensor-less vehicles, the route data set 201a may be an incomplete data set with missing sensor values 'X'.

In an embodiment of the present disclosure, the system for optimizing vehicle allocation in a transportation system may be implemented in the transportation system. A route data set may be provided to the system for optimization of vehicle allocation. Further, the route data set may have missing sensor values which may be imputed by the system to generate a complete set of sensor values with the imputed sensor values '•', as shown by route data set 201b. The complete set of sensor values indicate trip-wise station-related sensor data of a route which may be used by the system for optimizing vehicle allocation in the transportation system. The terminology "station" is not limited to a traditional train station or any specific type of transport terminal. Rather, "station" refers broadly to any designated location or point along a route at which sensor data may be collected, regardless of whether vehicles stop there or not. The term "station" may also encompass a variety of locations, such as bus stops, checkpoints, or other relevant spots along a route where sensor data gathering is required and is not confined to locations traditionally associated with transportation infrastructure.

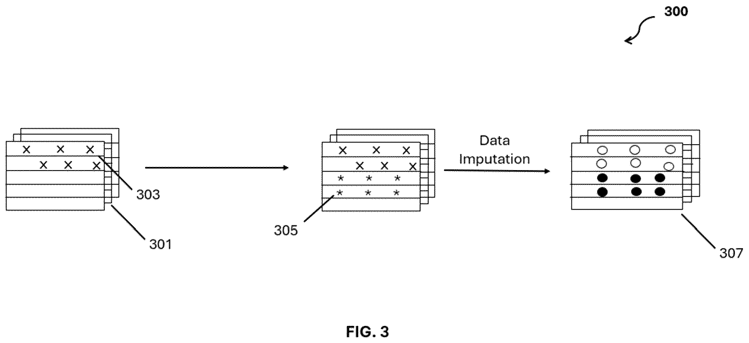

FIG. 3 illustrates a block diagram for determining missing sensor values, in accordance with an embodiment of the present disclosure.

As shown in fig. 3, sensor values 301 from a plurality of vehicles may be received by the system of the present disclosure. As the plurality of vehicles comprises both vehicles with sensors and sensor-less vehicles. The sensor values 301 represents a set of sensor values comprising set of sensor values received from the first set of vehicles and missing sensor values 303 indicated by 'X'.

In order to determine an optimized vehicle plan for the vehicles of a transportation system, a complete set of sensor values of the plurality of vehicles is required. The complete set of sensor values indicate trip-wise station-related sensor data of the one or more routes. Each trip comprises a plurality of stations.

Since the sensor values for the second set of vehicles are missing sensor values 'X', an imputation technique may be applied to the sensor values 301 using an artificial intelligence (AI) model to estimate the missing sensor values 'X'. The missing sensor values 'X' may be imputed to generate the complete set of sensor values 307 of the plurality of vehicles. In one non-limiting embodiment, the AI model may be a deep neural network (DNN) trained for imputing sensor values. However, the AI model is not limited to the above example and any other AI model trained for applying imputation technique is well within the scope of present disclosure.

To estimate the missing sensor values 'X', a plurality of sensor values 305 indicated by '*' may be dynamically removed from the received sensor values 301. The number of removed sensor values may be proportional to the number of missing values. Then, an imputation technique including time aware self-attention-based imputation for time series (TA-SAITS) may be applied on the remaining sensor values to estimate the missing sensor values 'X'. The imputed values may include the imputed sensor values indicated by "•" and corresponding to the missing sensor values 'X'. The imputed values may also include the imputed values indicated by "∘" and corresponding to the removed sensor values. In one non-limiting embodiment, any other imputation technique for obtaining the missing sensor values from a set of received sensor values is well within the scope of present disclosure.

Thereafter, an optimized vehicle plan may be generated for the plurality of vehicles based on the complete set of sensor values 307 as discussed in the embodiments below.

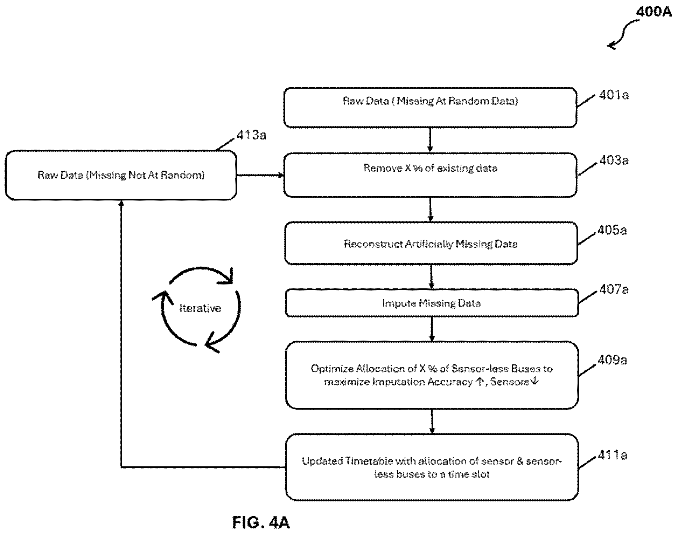

FIG. 4A illustrates a flow diagram for optimizing vehicle allocation in a transportation system, in accordance with an embodiment of the present disclosure.

As shown in fig. 4A, sensor values 401a from a plurality of vehicles may be received by the system of the present disclosure. The sensor values 401a may represent a set of sensor values comprising set of sensor values received from the first set of vehicles and missing sensor values. To estimate the missing sensor values, a plurality of sensor values 403a may be dynamically removed from the received sensor values 401a. The number of removed sensor values may be proportional to the number of missing values. Then, an imputation technique including time aware self-attention-based imputation for time series (TA-SAITS) may be applied on the remaining sensor values to estimate the missing sensor values and obtain a complete set of sensor values. The complete set of sensor values may be derived from imputation technique, as discussed in detail with reference to fig. 3 in the above embodiments. Further, the complete set of sensor values may be used to an optimized vehicle plan for one or more routes of the transportation system as discussed in detail in the embodiments below.

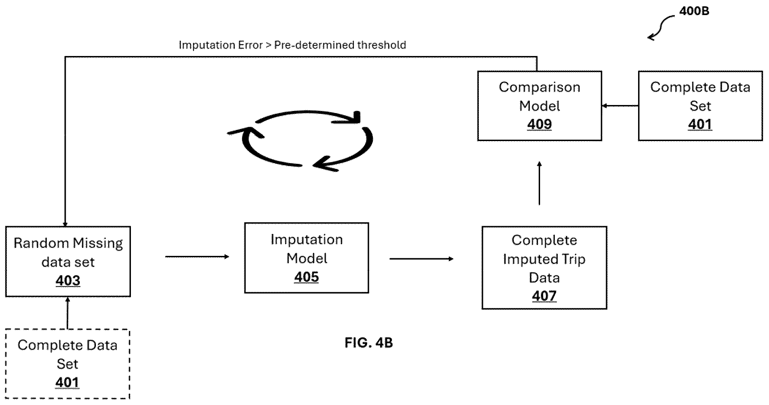

FIG. 4B illustrates a data flow block diagram for optimizing vehicle allocation in a transportation system, in accordance with an embodiment of the present disclosure.

In one embodiment of the present disclosure, an optimized vehicle plan for one or more routes of the transportation system may be determined based on a complete set of sensor values 401. The optimized vehicle plan comprises trip-wise plan of vehicles with sensors and sensor-less vehicles for the one or more routes.

To generate the optimized vehicle plan, the complete set of sensor values 401 may be used. The complete set of sensor values may be derived from imputation technique, as discussed in detail with reference to fig. 3 in the above embodiments. Firstly, one or more sets of trip data may be removed from the complete set of sensor values 401 of one or more trips to generate a random missing data set 403 with missing one or more trip data. The missing one or more trip data may indicate trips with sensor-less vehicles. The random missing data set 403 may be provided as input to an imputation model 405. Thereafter, an imputation technique including time aware self-attention-based imputation for time series (TA-SAITS) may be applied by the imputation model 405 on the random missing data set 403 to estimate the missing one or more trip data and generate the complete imputed trip data 407. TA-SAITS (Time-Aware Self-Attention for Irregular Time Series) is a model designed to address the complexities of time-series data, particularly in scenarios such as transport trip analysis. Building upon the SAITS framework, TA-SAITS introduces mechanisms that integrate temporal dynamics, enabling it to handle irregular time intervals and sequence dependencies with improved accuracy. By incorporating Time-Aware Positional Encoding (TAPE) and Time-Aware Self-Attention (TASA), the model captures both the order of events and the actual time gaps between them. These mechanisms address limitations of traditional self-attention models, which often struggle to manage uneven time gaps or to differentiate between recent and distant events. Additionally, the model includes a padding-aware self-attention mechanism that excludes irrelevant padding tokens, improving both computational efficiency and model performance.

The Time-Aware Self-Attention Mechanism (TASA) extends standard self-attention by embedding temporal information directly into the calculation of attention scores. This is achieved through a learnable decay factor and a time-weighting function, enabling the model to assess the relative importance of recent versus older data points. This incorporation of temporal sensitivity allows TA-SAITS to better handle irregular patterns and capture a range of temporal dynamics effectively.

The Time-Aware Positional Encoding (TAPE) replaces conventional positional encoding with timestamp-based encoding, ensuring that temporal relationships reflect actual time intervals rather than sequential positions. This enhancement makes the model more suited for handling unevenly spaced data. Combined with the padding-aware attention mechanism, TA-SAITS avoids unnecessary computation on non-informative values and focuses on meaningful sequence elements. Together, these features provide a methodology for processing irregular time-series data, making the model applicable for tasks such as transport trip data imputation.

In one non-limiting embodiment, any other imputation technique for obtaining missing sensor values is well within the scope of present disclosure.

Thereafter, the complete imputed trip data 407 along with the complete set of sensor values 401 may be provided to a comparison model 409. The comparison model 409 may compare the complete imputed trip data 407 and the complete set of sensor values 401 to generate an imputation error. Further, the comparison model 409 may also determine whether the imputation error is less than a pre-determined threshold. If the imputation error for the random missing data set 403 is less than the pre-determined threshold, the random missing data set 403 may be identified as a trip plan of sensor-less vehicles. Therefore, the trip-wise plan of vehicles with sensors and sensor-less vehicles for the particular route may be decided based on the imputation error. However, if the imputation error is greater than the pre-determined threshold, the optimized vehicle plan for the one or more routes of the transportation system may be iteratively re-determined by dynamically removing another one or more sets of trip data from the complete set of sensor values 401, till the imputation error is less than the pre-determined threshold or till the convergence of the imputation error to a global minimum is achieved.

The plurality of vehicles may be allocated to a route at least based on the optimized vehicle plan. The allocation of the plurality of vehicles is discussed in further detail in the embodiments below.

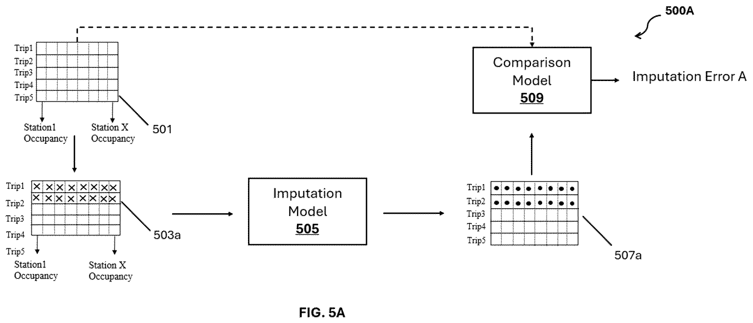

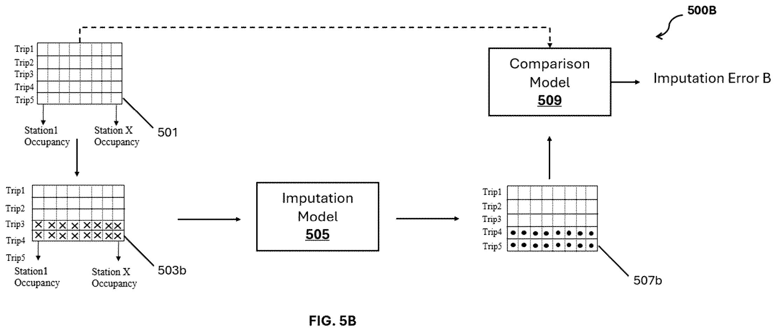

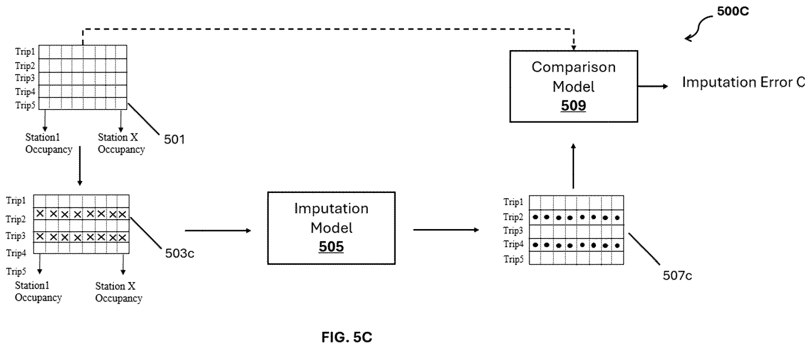

FIGS 5A, 5B and 5C illustrate exemplary optimized vehicle plan generation, in accordance with some embodiments of the present disclosure.

As shown in fig. 5A, a complete set of sensor values 501 may be used to generate an optimized vehicle plan. For this purpose, one or more sets of trip data may be removed from the complete set of sensor values 501 of a particular route to generate a random missing data set 503a. The random missing data set 503a may be provided as input to an imputation model 505. Thereafter, an imputation technique may be applied by the imputation model 505 on the random missing data set 503a to estimate the complete imputed trip data 507a.

Thereafter, the complete imputed trip data 507a along with the complete set of sensor values 501 may be provided to a comparison model 509. The comparison model 509 may compare the complete imputed trip data 507a and the complete set of sensor values 501 to generate an imputation error A. Further, the comparison model 509 may also determine whether the imputation error A is less than a pre-determined threshold. If the imputation error A is greater than the pre-determined threshold, the optimized vehicle plan for a route of the transportation system may be iteratively re-determined by dynamically removing another one or more sets of trip data from the complete set of sensor values 501 as shown in figs. 5b and 5c.

As shown in fig. 5b another one or more sets of trip data may be removed from the complete set of sensor values 501 of a particular route to generate a random missing data set 503b. The random missing data set 503b may be provided as input to an imputation model 505. Thereafter, an imputation technique may be applied by the imputation model 505 on the random missing data set 503b to estimate the complete imputed trip data 507b. Thereafter, the complete imputed trip data 507b along with the complete set of sensor values 501 may be provided to a comparison model 509. The comparison model 509 may again compare the complete imputed trip data 507b and the complete set of sensor values 501 to generate an imputation error B. If the imputation error B is greater than the pre-determined threshold, the optimized vehicle plan for the route of the transportation system may be iteratively re-determined by dynamically removing another one or more sets of trip data from the complete set of sensor values 501 as shown in fig. 5c.

As shown in fig. 5c, a random missing data set 503c may be determined by dynamically removing another one or more sets of trip data from the complete set of sensor values 501. The comparison model 509 may calculate an imputation error C based on the complete imputed trip data 507c and the complete set of sensor values 501. If the imputation error C is less than the pre-determined threshold, the random missing data set 503c may be identified as a trip plan of sensor-less vehicles.

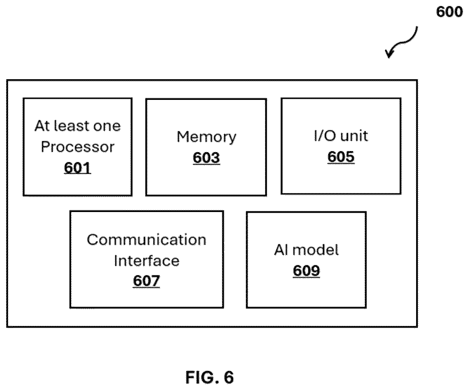

**FIG. 6** illustrates a block diagram of a system 600 for optimizing vehicle allocation in a transportation system, in accordance with an embodiment of the present disclosure. In one embodiment, the system 600 may be similar to the system of fig. 1.

In an embodiment of the present disclosure, the system 600 may comprise a memory 603, at least one processor 601, an input/output (I/O) unit 605, a communication interface 607 and an AI model 609 communicatively coupled with each other. In one embodiment, the AI model 609 may be locally part of the system 600. In another embodiment, the AI model 609 may be present on a server and accessed by the system 600.

It may be noted that, in some embodiments, the system 600 may include more or fewer components than those depicted herein. The various components of the system 600 may be implemented using hardware, software, firmware or any combinations thereof. Further, the various components of the system 600 may be operably coupled with each other. More specifically, various components of the system 600 may be capable of communicating with each other using communication channel media (such as buses, interconnects, etc.).

In one embodiment, the at least one processor 601 may be embodied as a multi-core processor, a single core processor, or a combination of one or more multi-core processors and one or more single core processors. For example, the at least one processor 601 may be embodied as one or more of various processing devices, such as a coprocessor, a microprocessor, a controller, a digital signal processor (DSP), a processing circuitry with or without an accompanying DSP, or various other processing devices including, a microcontroller unit (MCU), a hardware accelerator, a special-purpose computer chip, or the like.

In one embodiment, the memory 603 is capable of storing machine executable instructions, referred to herein as instructions. In an embodiment, the at least one processor 601 is embodied as an executor of software instructions. As such, the at least one processor 601 is capable of executing the instructions stored in the memory 603 to perform one or more operations described herein.

The memory 603 can be any type of storage accessible to the at least one processor 601 to perform respective functionalities. For example, the memory 603 may include one or more volatile or non-volatile memories, or a combination thereof. For example, the memory 603 may be embodied as semiconductor memories, such as flash memory, mask ROM, PROM (programmable ROM), EPROM (erasable PROM), RAM (random access memory), etc. and the like.

In one embodiment of the present disclosure, the at least one processor 601 may be configured to receive sensor values from a first set of vehicles of a plurality of vehicles. The sensor value may comprise, but not limited to, sensor values corresponding to the location, vehicle speed, traffic conditions, passenger occupancy tracking.

The plurality of vehicles may also comprise a second set of vehicles. The first set of vehicles may comprise vehicles with sensors and the second set of vehicles may comprise sensor-less vehicles.

The at least one processor 601 may be configured to determine an optimized vehicle plan for the plurality of vehicles based on the received sensor values. In order to determine an optimized vehicle plan for the vehicles of a transportation system, a complete set of sensor values of the plurality of vehicles is required. The complete set of sensor values indicate trip-wise station related sensor data of the one or more routes and each trip comprises a plurality of stations.

Since the sensor values for the second set of vehicles are missing sensor values 303, the at least one processor 601 may be configured to provide the received sensor values to the AI model 609 to estimate the missing sensor values. Furthermore, the at least one processor 601 may be configured to receive the complete set of sensor values from the AI model to determine an optimized vehicle plan for the plurality of vehicles of the transportation system.

The at least one processor 601 may also be configured to train the AI model with a sample set of sensor values and a sample set of imputation error values to generate corresponding missing sensor values.

In one embodiment, the AI model 609 may be configured to receive the sensor values from the first set of vehicles and estimate the missing sensor values. To estimate the missing sensor values, the AI model 609 may be configured to dynamically remove a plurality of sensor values from the received sensor values. The number of removed plurality of sensor values corresponds to the number of missing sensor values. Then, the AI model 609 may be configured to apply an imputation technique including time aware self-attention-based imputation for time series (TA-SAITS) on the remaining sensor values to estimate the missing sensor values. In one non-limiting embodiment, the AI model 609 may be configured to apply any other imputation technique for obtaining the missing sensor values from a set of received sensor values. Thereafter, the at least one processor 601 may be configured to provide the complete set of sensor values which comprise of the received sensor values and the estimated missing sensor values.

Once the complete set of sensor values are received, the at least one processor 601 may be configured to determine an optimized vehicle plan for each one or more routes of the transportation system based on the complete set of sensor values. The optimized vehicle plan comprises trip-wise plan of vehicles with sensors and sensor-less vehicles for each one or more routes. For this purpose, the at least one processor 601 may be configured to remove one or more set of trip data from the complete set of sensor values of a particular route. The removed set of trip data indicates trips with sensor-less vehicles. Further, the at least one processor 601 may be configured to apply an imputation technique on the remaining set of trip data to estimate the removed set of trip data. The imputation technique includes time aware self-attention-based imputation for time series (TA-SAITS) or any other imputation technique for estimating the removed set of trip data from the remaining set of trip data.

Thereafter, the at least one processor 601 may be configured to compare the removed set of trip data with the estimated set of trip data to determine an imputation error. Further, the at least one processor 601 may also be configured to determine trip-wise plan of vehicles with sensors and sensor-less vehicles for the particular route at least based on the imputation error. For this purpose, the at least one processor may be configured to determine whether the imputation error for the removed set of trip data is less than a predetermined threshold. When the imputation error for the removed set of trip data is less than the predetermined threshold, the at least one processor 601 may be configured to identify the removed set of trip data as a trip plan of sensor-less vehicles.

On the other hand, if the imputation error for the removed set of trip data is greater than the predetermined threshold, the at least one processor 601 may be configured to iteratively determine the optimized vehicle plan for the one or more routes of the transportation system, till the imputation error is less than the pre-determined threshold or till the convergence of the imputation error to a global minimum is achieved. A global minimum is the smallest possible value that a function can have across all possible solutions. In the present embodiment, this function measures imputation error. This means that out of every possible solution, the global minimum is the best one because it results in the lowest imputation error.

Lastly, the at least one processor 601 may be configured to allocate the plurality of vehicles to the one or more routes based on the optimized vehicle plan. To allocate the plurality of vehicles, the at least one processor 601 may be configured to assign vehicles with sensors and the sensor-less vehicles to a plurality of trips of one or more routes. In order to assign the vehicles, the at least one processor 601 may be configured to generate a recommendation comprising a number of vehicles with sensors and sensor-less vehicles for the one or more routes. Further, the at least one processor 601 may be configured to assign vehicles with sensors and the sensor-less vehicles to a plurality of trips of the one or more routes, based on the recommendation.

The at least one processor 601 may be configured to allocate the plurality of vehicles to the one or more routes further based on one or more parameters including historical data patterns of sensor values, current network conditions, special events or anticipated changes in demand and coverage of critical network points.

Thus, the system 600 facilitates more efficient and cost-effective data collection by dynamically allocating sensors based on real-time conditions thereby improving the accuracy of imputed data. Further, the system 600 enhances the scalability and operational efficiency of demand-based transportation networks, enabling better decision-making and resource management.

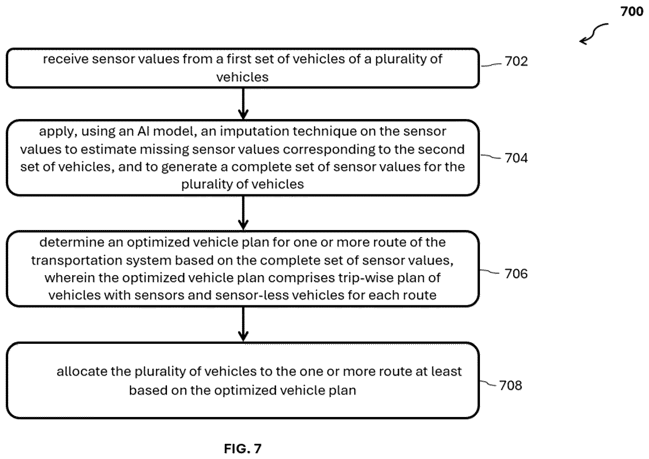

FIG. 7 illustrates a flowchart for a method 700 for optimizing vehicle allocation in a transportation system, in accordance with an embodiment of the present disclosure.

At step 702, the method 700 discloses receiving sensor values from a first set of vehicles of a plurality of vehicles. The sensor value may comprise, but not limited to, sensor values corresponding to the location, vehicle speed, traffic conditions, passenger occupancy tracking. The plurality of vehicles may also comprise a second set of vehicles. The first set of vehicles may comprise vehicles with sensors and the second set of vehicles may comprise sensor-less vehicles

Further, at step 704, the method 700 discloses applying, using an AI model, an imputation technique on the sensor values to estimate missing sensor values corresponding to the second set of vehicles, and to generate a complete set of sensor values for the plurality of vehicles. To estimate the missing sensor values, the method 700 discloses dynamically removing a plurality of sensor values from the received sensor values. The number of removed plurality of sensor values corresponds to the number of missing sensor values. Then, the method 700 discloses applying an imputation technique including time aware self-attention-based imputation for time series (TA-SAITS) on the remaining sensor values to estimate the missing sensor values. In one non-limiting embodiment, any other imputation technique for obtaining the missing sensor values from a set of received sensor values is well within the scope of the present disclosure.

The method 700 also discloses training the AI model with a sample set of sensor values and a sample set of imputation error values to generate corresponding missing sensor values.

At step 706, the method discloses determining an optimized vehicle plan for each one or more routes of the transportation system based on the complete set of sensor values. The optimized vehicle plan comprises trip-wise plan of vehicles with sensors and sensor-less vehicles for the each one or more routes. To determine an optimized vehicle plan for the vehicles of a transportation system, a complete set of sensor values of the plurality of vehicles is required. The complete set of sensor values indicate trip-wise station-related sensor data of the one or more routes and each trip comprises a plurality of stations. For this purpose, the method 700 discloses removing one or more set of trip data from the complete set of sensor values of a particular route. The removed set of trip data indicates trips with sensor-less vehicles. Further, the method 700 discloses applying an imputation technique on the remaining set of trip data to estimate the removed set of trip data. The imputation technique includes time aware self-attention-based imputation for time series (TA-SAITS) or any other imputation technique for estimating the removed set of trip data from the remaining set of trip data.

Thereafter, the method 700 discloses comparing the removed set of trip data with the estimated set of trip data to determine an imputation error. Further, the method 700 discloses determining trip-wise plan of vehicles with sensors and sensor-less vehicles for the particular route at least based on the imputation error. For this purpose, the method 700 discloses determining whether the imputation error for the removed set of trip data is less than a predetermined threshold. When the imputation error for the removed set of trip data is less than the predetermined threshold, the method 700 discloses identifying the removed set of trip data as a trip plan of sensor-less vehicles. On the other hand, if the imputation error for the removed set of trip data is greater than the predetermined threshold, the method 700 discloses iteratively determining the optimized vehicle plan for the one or more routes of the transportation system, till the imputation error is less than the pre-determined threshold or till the convergence of the imputation error to a global minimum is achieved. A global minimum is the smallest possible value that a function can have across all possible solutions. In the present embodiment, this function measures imputation error. This means that out of every possible solution, the global minimum is the best one because it results in the lowest imputation error.

Lastly, at step 708, the method 700 discloses allocating the plurality of vehicles to the one or more routes at least based on the optimized vehicle plan. To allocate the plurality of vehicles, the method 700 discloses assigning vehicles with sensors and the sensor-less vehicles to a plurality of trips of one or more routes. To assign the vehicles, the method 700 discloses generating a recommendation comprising a number of vehicles with sensors and sensor-less vehicles for the one or more routes. Further, the method 700 discloses assigning vehicles with sensors and the sensor-less vehicles to a plurality of trips of the one or more routes, based on the recommendation. Moreover, the method 700 also discloses allocating the plurality of vehicles to the one or more routes further based on one or more parameters including historical data patterns of sensor values, current network conditions, special events or anticipated changes in demand and coverage of critical network points.

Thus, the method 700 optimizes sensor placement and data collection in real-time, ensuring that sensor resources are allocated dynamically according to fluctuating conditions like passenger behavior, traffic, and time of day. Furthermore, the method 700 enhances the quality of imputed data by intelligently managing sensor allocation.

The sequence of operations of the method 700 need not be necessarily executed in the same order as they are presented. Further, one or more operations may be grouped together and performed in the form of a single step, or one operation may have several sub-steps that may be performed in parallel or in a sequential manner.

The disclosed method with reference to Fig. 7, or one or more operations of the system 700 explained with reference to fig. 7 may be implemented using software including computer-executable instructions stored on one or more computer-readable media (e.g., non-transitory computer-readable media, such as one or more optical media discs, volatile memory components (e.g., DRAM or SRAM), or non-volatile memory or storage components (e.g., hard drives or solid-state non-volatile memory components, such as Flash memory components) and executed on a computer (e.g., any suitable computer, such as a laptop computer, net book, Web book, tablet computing device, smart phone, or other mobile computing device). Such software may be executed, for example, on a single local computer.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" may be understood to include tangible items and exclude carrier waves and transient signals, i.e., be non-transitory. Examples include Random Access Memory (RAM), Read-Only Memory (ROM), volatile memory, non-volatile memory, hard drives, CD (Compact Disc) ROMs, DVDs, flash drives, disks, and any other known physical storage media.

It will be understood by those within the art that, in general, terms used herein, and are generally intended as "open" terms (e.g., the term "including" may be interpreted as "including but not limited to," the term "having" may be interpreted as "having at least," the term "includes" may be interpreted as "includes but is not limited to," etc.). For example, as an aid to understanding, the detail description may contain usage of the introductory phrases "at least one" and "one or more" to introduce recitations. However, the use of such phrases may not be construed to imply that the introduction of a recitation by the indefinite articles "a" or "an" limits any particular part of description containing such introduced recitation to disclosure containing only one such recitation, even when the introductory phrases "one or more" or "at least one" and indefinite articles such as "a" or "an" (e.g., "a" and/or "an" may typically be interpreted to mean "at least one" or "one or more") are included in the recitations; the same holds true for the use of definite articles used to introduce such recitations. In addition, even if a specific part of the introduced description recitation is explicitly recited, those skilled in the art will recognize that such recitation may typically be interpreted to mean at least the recited number (e.g., the bare recitation of "two recitations," without other modifiers, typically means at least two recitations or two or more recitations).

While various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following detailed description.

## Claims

1. A method for optimizing vehicle allocation in a transportation system, the method comprising:
receiving sensor values from a first set of vehicles of a plurality of vehicles, wherein the first set of vehicles comprises vehicles with sensors, and wherein the plurality of vehicles comprises a second set of vehicles including sensor-less vehicles;
applying, using an AI model, an imputation technique on the sensor values to estimate missing sensor values corresponding to the second set of vehicles, and to generate a complete set of sensor values for the plurality of vehicles;
determining an optimized vehicle plan for one or more routes of the transportation system based on the complete set of sensor values, wherein the optimized vehicle plan comprises trip-wise plan of vehicles with sensors and sensor-less vehicles for the one or more routes; and
allocating the plurality of vehicles to the one or more routes at least based on the optimized vehicle plan.

2. The method as claimed in claim 1, wherein the complete set of sensor values indicate trip-wise station related sensor data of the one or more routes, and wherein each trip comprises plurality of stations.

3. The method as claimed in claim 1, wherein determining the optimized vehicle plan for the one or more routes of the transportation system comprises:
iteratively performing:
removing one or more set of trip data from the complete set of sensor values of a particular route, wherein the removed set of trip data indicates trips with sensor-less vehicles;
applying the imputation technique on the remaining set of trip data to estimate the removed set of trip data; and
comparing the removed set of trip data with the estimated set of trip data to determine an imputation error; and
determining trip-wise plan of vehicles with sensors and sensor-less vehicles for the particular route at least based on the imputation error.

4. The method as claimed in claim 3, wherein determining the trip-wise plan of vehicles with sensors and sensor-less vehicles for the particular route comprises:
determining whether the imputation error for the removed set of trip data is less than a predetermined threshold; and
identifying the removed set of trip data as a trip plan of sensor-less vehicles when the imputation error for the removed set of trip data is less than the predetermined threshold.

5. The method as claimed in claim 1, wherein estimating the missing sensor values comprises:
dynamically removing a plurality of sensor values from the received sensor values, wherein the number of removed plurality of sensor values correspond to the number of missing sensor values; and
applying the imputation technique on the remaining sensor values to estimate the missing sensor values.

6. The method as claimed in claim 1, wherein allocating the plurality of vehicles to the one or more routes comprises assigning vehicles with sensors and the sensor-less vehicles to a plurality of trips of one or more routes.

7. The method as claimed in claim 1, further comprising:
training the AI model with a sample set of sensor values and a sample set of imputation error values to generate corresponding missing sensor values.

8. The method as claimed in claim 1, wherein allocating the plurality of vehicles to the one or more routes further comprises:
allocating the plurality of vehicles to the one or more routes further based on one or more parameters including historical data patterns of sensor values, current network conditions, special events or anticipated changes in demand and coverage of critical network points.

9. The method as claimed in claim 1, wherein allocating the plurality of vehicles to the one or more routes comprises:
generating a recommendation comprising a number of vehicles with sensors and sensor-less vehicles for the one or more routes; and
assigning vehicles with sensors and the sensor-less vehicles to a plurality of trips of the one or more routes, based on the recommendation.

10. A system for optimizing vehicle allocation in a transportation system, the system comprising:
a memory; and
at least one processor;
wherein the at least one processor is configured to:
receive sensor values from a first set of vehicles of a plurality of vehicles, wherein the first set of vehicles comprises vehicles with sensors, and wherein the plurality of vehicles comprises a second set of vehicles including sensor-less vehicles;
apply, using an AI model, an imputation technique on the sensor values to estimate missing sensor values corresponding to the second set of vehicles, and to generate a complete set of sensor values for the plurality of vehicles;
determine an optimized vehicle plan for one or more routes of the transportation system based on the complete set of sensor values, wherein the optimized vehicle plan comprises trip-wise plan of vehicles with sensors and sensor-less vehicles for the one or more routes; and
allocate the plurality of vehicles to the one or more routes at least based on the optimized vehicle plan.

11. The system as claimed in claim 10, wherein to determine the optimized vehicle plan for the one or more routes of the transportation system, the at least one processor is configured to:
iteratively perform:
remove one or more set of trip data from the complete set of sensor values of a particular route, wherein the removed set of trip data indicates trips with sensor-less vehicles;
apply the imputation technique on the remaining set of trip data to estimate the removed set of trip data; and
compare the removed set of trip data with the estimated set of trip data to determine an imputation error; and
determine trip-wise plan of vehicles with sensors and sensor-less vehicles for the particular route at least based on the imputation error.

12. The system as claimed in claim 10, wherein to estimate the one or more missing sensor values of one or more sensor-less vehicles, the at least one processor is configured to:
dynamically remove a plurality of sensor values from the received sensor values, wherein the number of removed plurality of sensor values correspond to the number of missing sensor values; and
apply the imputation technique on the remaining sensor values to estimate the missing sensor values.

13. The system as claimed in claim 10, wherein to allocate the plurality of vehicles to the one or more routes, the at least one processor is configured to assign vehicles with sensors and the sensor-less vehicles to a plurality of trips of the one or more routes.

14. The system as claimed in claim 10, wherein to allocate the plurality of vehicles to the one or more routes, the at least one processor is further configured to allocate the plurality of vehicles to the one or more routes further based on one or more parameters including historical data patterns of sensor values, current network conditions, special events or anticipated changes in demand and coverage of critical network points.

15. The method as claimed in claim 10, wherein to allocate the plurality of vehicles to the one or more routes, the at least one processor is configured to assign:
generate a recommendation comprising a number of vehicles with sensors and sensor-less vehicles for the one or more routes; and
assign vehicles with sensors and the sensor-less vehicles to a plurality of trips of the one or more routes, based on the recommendation.

## Amended claims

### Amended claims in accordance with Rule 137(2) EPC.

1. A method (700) for optimizing vehicle allocation in a transportation system (107), the method comprising:
(702) receiving sensor values from a first set of vehicles of a plurality of vehicles (101), wherein the first set of vehicles (103) comprises vehicles with sensors, and wherein the plurality of vehicles comprises a second set of vehicles (105) including sensor-less vehicles;
(704) applying, using an AI model, an imputation technique on the sensor values (301) to estimate missing sensor values corresponding to the second set of vehicles, and to generate a complete set of sensor values (307) for the plurality of vehicles (101);
(706) determining an optimized vehicle plan for one or more routes of the transportation system based on the complete set of sensor values (307), wherein the optimized vehicle plan comprises trip-wise plan of vehicles with sensors and sensor-less vehicles (105) for the one or more routes; and
(708) allocating the plurality of vehicles (101) to the one or more routes at least based on the optimized vehicle plan.

2. The method (700) as claimed in claim 1, wherein the complete set of sensor values (307) indicate trip-wise station related sensor data of the one or more routes, and wherein each trip comprises plurality of stations.

3. The method (700) as claimed in claim 1, wherein determining the optimized vehicle plan for the one or more routes of the transportation system (107) comprises:
iteratively performing:
removing one or more set of trip data from the complete set of sensor values (307) of a particular route, wherein the removed set of trip data indicates trips with sensor-less vehicles (105);
applying the imputation technique on the remaining set of trip data to estimate the removed set of trip data; and
comparing the removed set of trip data with the estimated set of trip data to determine an imputation error; and
determining trip-wise plan of vehicles with sensors (103) and sensor-less vehicles (105) for the particular route at least based on the imputation error.

4. The method (700) as claimed in claim 3, wherein determining the trip-wise plan of vehicles with sensors (103) and sensor-less vehicles (105) for the particular route comprises:
determining whether the imputation error for the removed set of trip data is less than a predetermined threshold; and
identifying the removed set of trip data as a trip plan of sensor-less vehicles (105) when the imputation error for the removed set of trip data is less than the predetermined threshold.

5. The method (700) as claimed in claim 1, wherein estimating the missing sensor values comprises:
dynamically removing a plurality of sensor values from the received sensor values, wherein the number of removed plurality of sensor values correspond to the number of missing sensor values; and
applying the imputation technique on the remaining sensor values to estimate the missing sensor values.

6. The method (700) as claimed in claim 1, wherein allocating the plurality of vehicles (101) to the one or more routes comprises assigning vehicles with sensors (103) and the sensor-less vehicles (105) to a plurality of trips of one or more routes.

7. The method (700) as claimed in claim 1, further comprising:
training the AI model with a sample set of sensor values and a sample set of imputation error values to generate corresponding missing sensor values.

8. The method (700) as claimed in claim 1, wherein allocating the plurality of vehicles (101) to the one or more routes further comprises:
allocating the plurality of vehicles (101) to the one or more routes further based on one or more parameters including historical data patterns of sensor values, current network conditions, special events or anticipated changes in demand and coverage of critical network points.

9. The method (700) as claimed in claim 1, wherein allocating the plurality of vehicles (101) to the one or more routes comprises:
generating a recommendation comprising a number of vehicles with sensors (103) and sensor-less vehicles (105) for the one or more routes; and
assigning vehicles (103) with sensors and the sensor-less vehicles (105) to a plurality of trips of the one or more routes, based on the recommendation.

10. A system (600) for optimizing vehicle allocation in a transportation system (107), the system (600) comprising:
a memory (603); and
at least one processor (601);
wherein the at least one processor (601) is configured to:
receive sensor values from a first set of vehicles (103) of a plurality of vehicles (101), wherein the first set of vehicles comprises vehicles with sensors, and wherein the plurality of vehicles (101) comprises a second set of vehicles (105) including sensor-less vehicles;
apply, using an AI model, an imputation technique on the sensor values (301) to estimate missing sensor values corresponding to the second set of vehicles (105), and to generate a complete set of sensor values (307) for the plurality of vehicles (1019;
determine an optimized vehicle plan for one or more routes of the transportation system based on the complete set of sensor values (307), wherein the optimized vehicle plan comprises trip-wise plan of vehicles with sensors and sensor-less vehicles (105) for the one or more routes; and
allocate the plurality of vehicles (101) to the one or more routes at least based on the optimized vehicle plan.

11. The system (600) as claimed in claim 10, wherein to determine the optimized vehicle plan for the one or more routes of the transportation system (107), the at least one processor (601) is configured to:
iteratively perform:
remove one or more set of trip data from the complete set of sensor values (307) of a particular route, wherein the removed set of trip data indicates trips with sensor-less vehicles (105);
apply the imputation technique on the remaining set of trip data to estimate the removed set of trip data; and
compare the removed set of trip data with the estimated set of trip data to determine an imputation error; and
determine trip-wise plan of vehicles with sensors (103) and sensor-less vehicles (105) for the particular route at least based on the imputation error.

12. The system (600) as claimed in claim 10, wherein to estimate the one or more missing sensor values of one or more sensor-less vehicles (105), the at least one processor is configured to:
dynamically remove a plurality of sensor values from the received sensor values, wherein the number of removed plurality of sensor values correspond to the number of missing sensor values; and
apply the imputation technique on the remaining sensor values to estimate the missing sensor values.

13. The system (600) as claimed in claim 10, wherein to allocate the plurality of vehicles to the one or more routes, the at least one processor (601) is configured to assign vehicles with sensors (103) and the sensor-less vehicles (105) to a plurality of trips of the one or more routes.

14. The system (600) as claimed in claim 10, wherein to allocate the plurality of vehicles (101) to the one or more routes, the at least one processor is further configured to allocate the plurality of vehicles (101) to the one or more routes further based on one or more parameters including historical data patterns of sensor values, current network conditions, special events or anticipated changes in demand and coverage of critical network points.

15. The method (600) as claimed in claim 10, wherein to allocate the plurality of vehicles (101) to the one or more routes, the at least one processor is configured to assign:
generate a recommendation comprising a number of vehicles with sensors (103) and sensor-less vehicles (105) for the one or more routes; and
assign vehicles with sensors (103) and the sensor-less vehicles (105) to a plurality of trips of the one or more routes, based on the recommendation.
